# EUROPEAN PATENT SPECIFICATION

(11) **EP 0 885 161 B1**
(45) Date of publication and mention of the grant of the patent: **12.04.2000**
(21) Application number: 96925170.1
(22) Date of filing: 24.07.1996
(51) Int. Cl.: B65G 65/00

(54) **APPARATUS FOR LOADING AND UNLOADING A CONTAINER WITH STACKS OF PACKAGES, SUCH AS, FOR INSTANCE, EGG TRAYS OR EGG BOXES**
VORRICHTUNG ZUM BE-UND ENTLADEN VON EINEM BEHÄLTER MIT STAPELN VON PACKUNGEN,INSBESONDERE EIERKARTONS ODER EIERSCHACHTELN
DISPOSITIF SERVANT A CHARGER ET DECHARGER UN CONTENEUR D'EMBALLAGES EMPILES, TELS QUE DES PLATEAUX OU DES BOITES CONTENANT DES OEUFS

(30) Priority: 24.07.1995 NL 1000879
(43) Date of publication of application: 23.12.1998
(73) Proprietor: FPS Food Processing Systems B.V., 3771 VC Barneveld (NL)
(72) Inventor: VAN DE HAZEL, Brand, NL-3882 VE Putten (NL)
(74) Representative: Smulders, Theodorus A.H.J., Ir.
(86) International application number: PCT/NL96/00299
(87) International publication number: WO 97/03904

(56) References cited:
- EP-A- 0 534 558
- FR-A- 2 370 664

## Description

The invention relates to an apparatus according to the preamble of claim 1.

Such an apparatus is known from European patent EP-B-0 534 558.

The known apparatus is a loading apparatus whose transfer means are formed by a collecting table arranged for up and down movement and two pusher plates movable perpendicularly to each other. The known loading apparatus has as its major problem that the processing capacity thereof is too low. With the conventional containers suitable for the storage of egg trays, with six stacks of egg trays being stored on each container shelf, a capacity of about 60,000 eggs per hour is achieved. Because the other egg-processing apparatuses generally have a much higher capacity, the known apparatus for unloading such a container constitutes the bottleneck in the machinery.

Another problem of the known apparatus is formed in that the sometimes wet or moist egg trays are damaged when sliding from a container shelf onto the collecting table and vice versa.

Further, despite the fact that the height adjustment of the collecting table is controlled on the basis of the height of the container shelves, it may still occur that the collecting table is locally positioned slightly above or below the container shelf, for instance because the container shelf is not completely flat and the height measurement for positioning the collecting table took place at a lower part of the container shelf. Under these conditions, when the egg trays are being slid from the collecting table onto the container shelf, the bottoms of these trays may bump against the edge of the container shelf and thus also be damaged.

An important delaying factor which particularly causes the low capacity of the apparatus is formed by the mechanism by means of which the stacks, fed one behind the other by the further conveyor, are juxtaposed on the container shelf. This takes place by means of the two pusher plates movable perpendicularly to each other, a first pusher plate in each case pushing two stacks from the further conveyor onto the collecting table, whereupon the first pusher plate is withdrawn in order that, next, the second pusher plate pushes the two stacks from the collecting table onto a container shelf. This is a time-consuming manner of filling a container shelf, wherein the time is lost in particular on account of the fact that in each case, two stacks located one behind the other are transferred from the further conveyor onto the collecting table, the collecting table is moved to the desired container shelf and, after that, the two stacks located one behind the other are pushed from the collecting table. For each container shelf, these operations should be repeated at least twice in order to place six stacks of packages thereon. Further, in the known loading apparatus, the stacks should change direction of movement twice, which twice results in a stop in the conveyance.

The object of the invention is to provide an apparatus for loading and/or unloading a container with stacks of packages of the type set forth in the preamble, without involving the drawbacks described hereinabove.

To this end, the apparatus is characterized by the features of claim 1.

In the case of an unloading apparatus, with transfer means thus designed, a number of juxtaposed stacks of egg trays or egg boxes can simply be positioned one behind the other by first driving one of the two first conveyors, which are drivable independently of each other, and then, when the boxes have been discharged therefrom, driving the other one of the two first endless conveyors. In the case where it concerns a container-unloading apparatus, the guiding elements are constructed as two guiding elements disposed in the manner of a funnel, whose mutual distance, viewed in the conveying direction from the first end to the second end of the second conveyor, decreases, and the distance between the guiding elements at the first end of the second conveyor at least corresponds to twice the width of the stacks of packages to be processed, whilst this distance at the second end of the second conveyor is larger than the width but in any case smaller than twice the width of the stacks of packages to be processed.

In the case of a loading apparatus, the guiding elements are constructed as pivotally arranged guiding elements, bounding a conveying path which, viewed from the second end of the second conveyor, in a first swivel position leads to one first conveyor and in a second swivel position leads to the other first conveyor, and which in a neutral position leads straight on. During the loading of a container shelf, the stacks fed one behind the other are first placed on one first conveyor, then the guiding elements are brought into another position and the following stacks are placed on the other first conveyor. After that, the second conveyor of the conveyor assembly can also be filled with stacks, whereupon, next, the stacks located on the different conveyors are taken to a container shelf in one transferring pass.

The invention has two variants, the first variant being characterized by the features of claim 2. This variant is particularly favorable because located between the container-positioning place and the further conveyor is only the conveyor assembly, which is connectable by the first ends of the first conveyors to a container shelf and by the second end of the second conveyor to the further conveyor. Such an apparatus is relatively cheap, as it comprises only few parts.

If a greater capacity is desired, the second alternative, characterized by the features of claim 6, is the best option. Owing to the collecting table present, the stacks can be transferred between the further conveyor and the conveyor assembly, while at the same time, stacks are transferred between a containter shelf and the collecting table. In this connection, it is particularly favorable if the collecting table has a surface such that all stacks of a single container shelf can be stored thereon. In fact, with such a construction, it is provided that two transfers can take place simultaneously, viz, one transfer involving the further conveyor and one transfer involving a container shelf, as a result of which a considerable increase of capacity is obtained.

Moreover, to both alternatives a number of other advantages of great importance are further attached. As the conveyor assembly and the collecting table, if present, comprise endless conveyors, displacement of the stacks of packages on these surfaces at least no longer involves any friction. After all, the bottom of the lowermost package of the stack is stationary relative to the moving surface of the collecting table or conveyor assembly. As soon as a stack of packages has been slightly slid by the sliding means onto the collecting table or the conveyor assembly, the conveyor of the collecting table or the conveyor assembly takes over the conveyance of the stack, so that, moreover, the pressure that is to be exerted on a following stack of packages from a row of stacks to be transferred decreases through the fact that the friction experienced by the row of stacks decreases as soon as the conveyance of a preceding stack from the row of stacks is provided by the conveyor of the collecting table or the conveyor assembly.

Also, because the end of the collecting table conveyor or the conveyor assembly that is connectable to a container shelf is bounded by a reversing roller, the height adjustment of the collecting table or the conveyor assembly relative to the container shelf is no longer so critical. After all, if the collecting table or the conveyor assembly is located slightly above the container shelf, a stack coming from a container shelf and running against the reversing roller will still be taken along without being damaged, because of the conveying movement of the conveyor of the collecting table or the conveyor assembly.

However, the major advantage of the apparatus according to the invention over the known apparatus is formed by the higher processing capacity thereof. This increase of capacity is realized in particular by the more favorable pattern of movement described by the stacks and because the conveyor assembly can contain the complete number of stacks that can be stored on a container shelf. This enables capacities of about 120,000 eggs per hour.

Further elaborations of the invention are described in the subclaims, which will be specified on the basis of four exemplary embodiments, with reference to the accompanying drawings, wherein:
Fig. 1 is a side elevation of a first exemplary embodiment of an unloading apparatus;
Fig. 2 is a top plan view of the exemplary embodiment shown in Fig. 1;
Fig. 3 is a side elevation of a first exemplary embodiment of a loading apparatus;
Fig. 4 is a top plan view of the exemplary embodiment shown in Fig. 3;
Fig. 5 is a side elevation of a second exemplary embodiment of an unloading apparatus;
Fig. 6 is a top plan view of the unloading apparatus shown in Fig. 5;
Fig. 7 is a side elevation of a third exemplary embodiment of an unloading apparatus;
Fig. 8 is a top plan view of the unloading apparatus shown in Fig. 7;
Fig. 9 shows a detail of the sliding means and the retaining elements in a first position; and
Fig. 10 shows the detail of the sliding means and the retaining elements shown in Fig. 9, in a second position.

The exemplary embodiments shown all concern apparatuses for loading and/or unloading a container 1 with stacks of packages S, such as for instance egg boxes or egg trays, which container 1 comprises a number of container shelves 2 which are arranged one above the other and supported by a frame 3. In the exemplary embodiment shown, the container shelves 2 can contain six stacks of packages disposed in three rows S1, S2, S3. The vertical standards of the frame 3 located at the corner points of the container 1 are generally formed by L-shaped angle sections. Hence, the stacks of packages S, during the positioning or removal thereof, should first be shifted in a first direction over the container shelf 2 and then in a second direction. This is necessary for enabling the stacks of packages S to be accurately positioned in an L-shaped corner or to be removed therefrom. The apparatuses shown all comprise a container-positioning place 28 and sliding means 6, 14, 16 for sliding the stacks of packages S on a container shelf 2. The sliding means 6, 14, 16 are displaceable in vertical direction relative to the container 1. For loading and/or unloading the container 1, the stacks of packages S are fed or discharged on a further conveyor 10 one behind the other. All apparatuses shown are intended for effecting the transfer of the stacks of packages S between this further conveyor 10 and the container 1 in a most efficient manner.

For this purpose, all exemplary embodiments comprise a conveyor assembly 7, 8, 9, provided, on a side thereof facing the container-positioning place 28, with at least two endless first conveyors 7, 8, drivable independently of each other and extending next to each other, and, on the side thereof facing the further conveyor 10, with a single, endless second conveyor 9. A second end 7b, 8b of the first conveyors 7, 8 connects to a first end 9a of the second conveyor. Arranged above the conveying surface of at least the second conveyor 9 are guiding elements 12, 15 for guiding the stacks S to be displaced. With this conveyor assembly 7, 8, 9, the stacks S, fed one behind the other, can readily be juxtaposed, or stacks S fed in opposite direction, side by side, can readily be positioned one behind the other. This can take place without utilizing pusher plates moving perpendicularly to each other and with a minimum risk of damage to the stacks of packages. In particular in respect of egg trays or egg boxes, this is of particularly great importance.

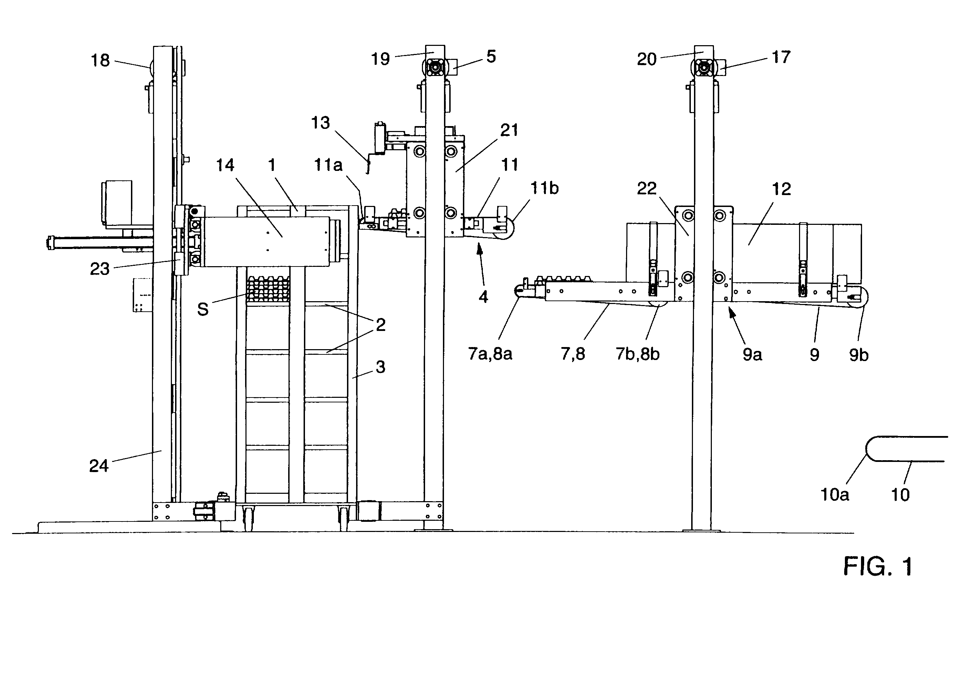

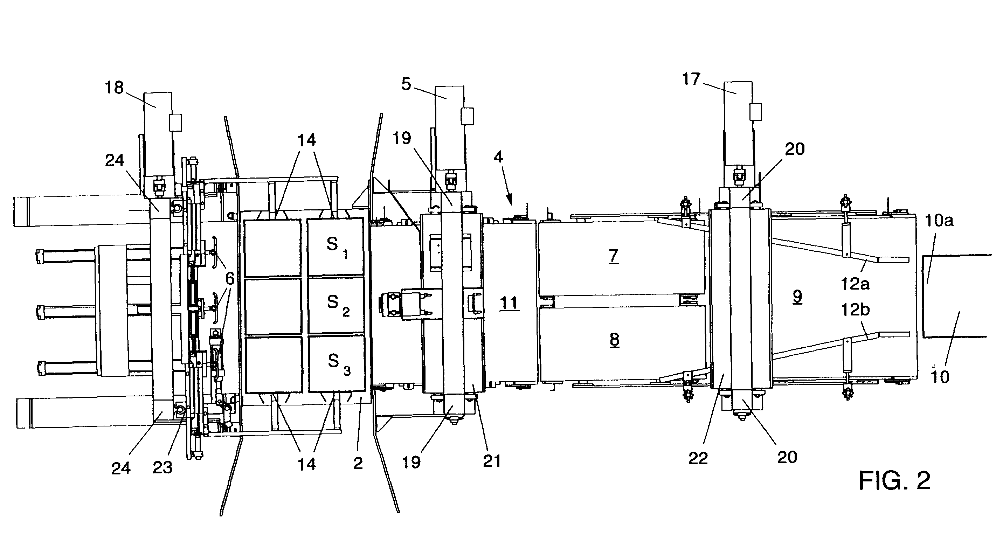

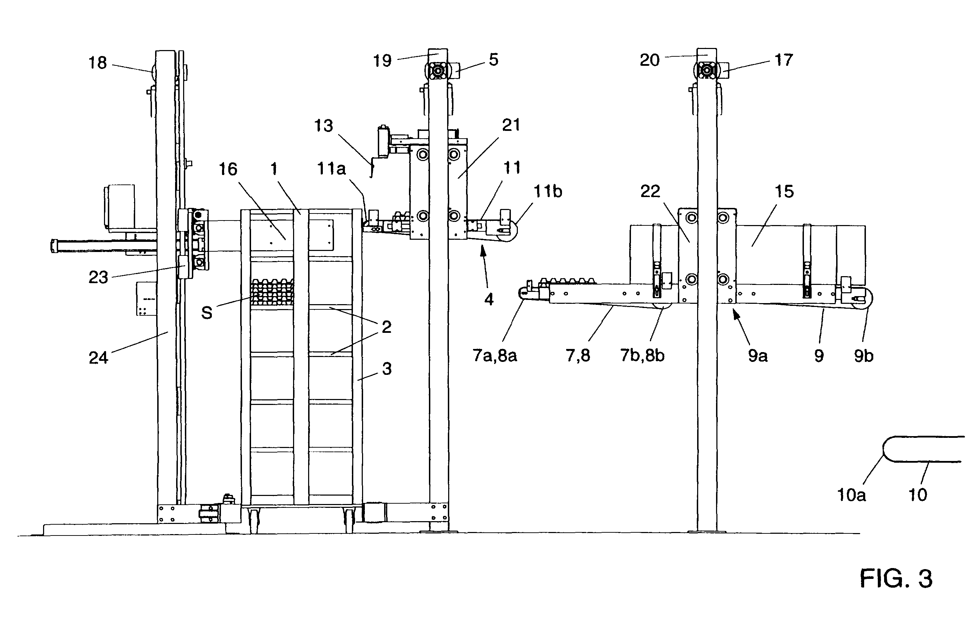

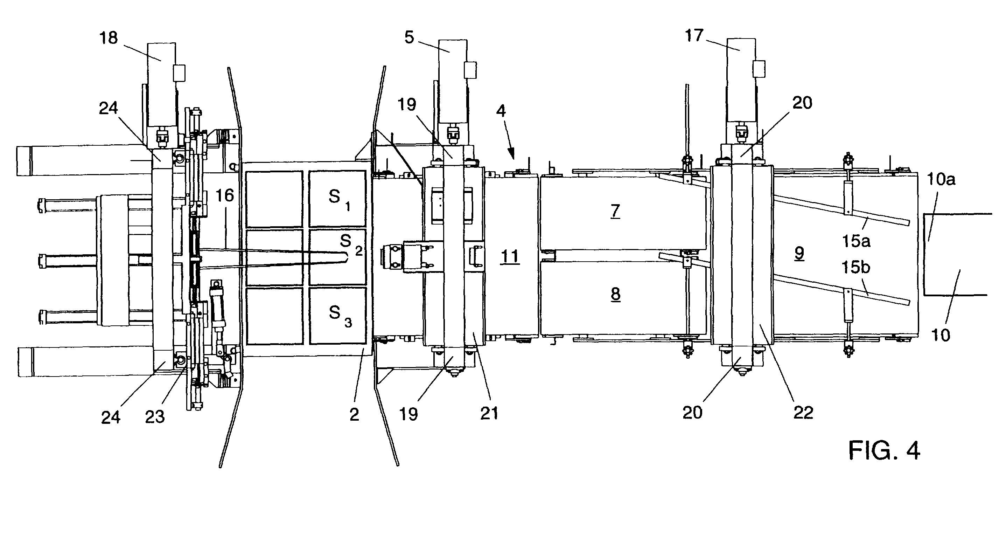

The different exemplary embodiments show a number of variants of loading or unloading apparatuses. The different variants are distinguished by a difference in capacity and a difference in the number of components. The exemplary embodiment of an unloading apparatus shown in Figs. 1 and 2 comprises a conveyor assembly 7, 8, 9 movable in vertical direction, and a collecting table 4 arranged for movement in vertical direction. The exemplary embodiment of a loading apparatus shown in Figs. 3 and 4 also comprises a conveyor assembly 7, 8, 9 movable in vertical direction, and a collecting table 4 arranged for movement in vertical direction.

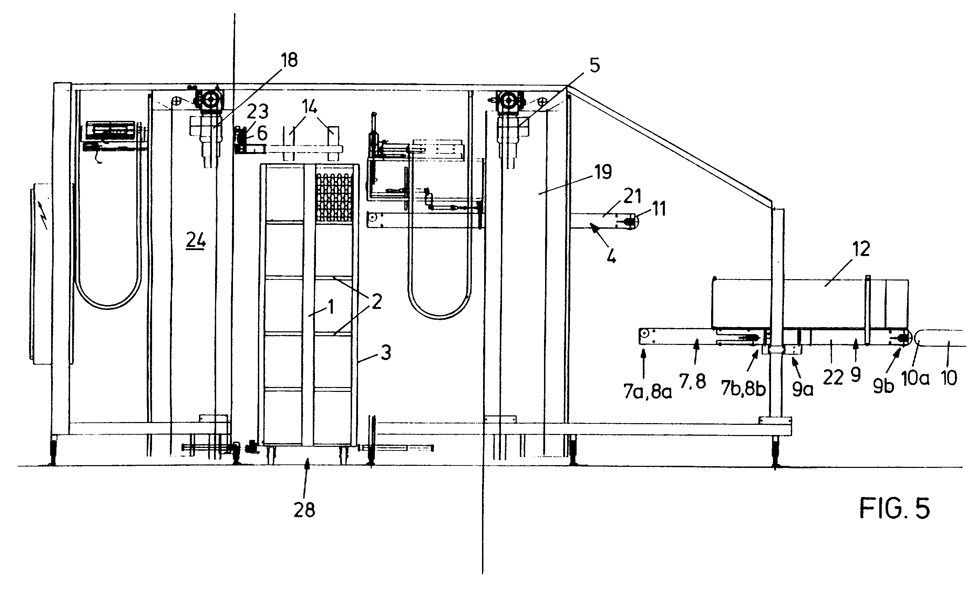

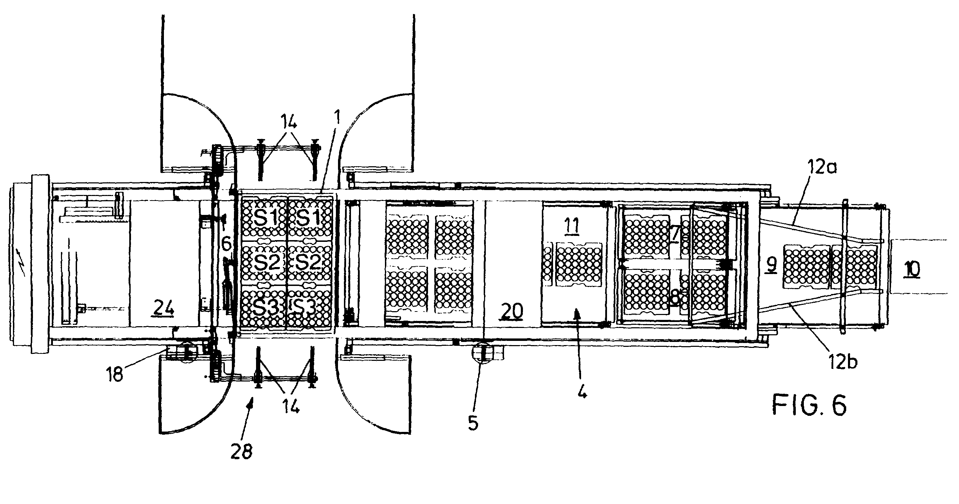

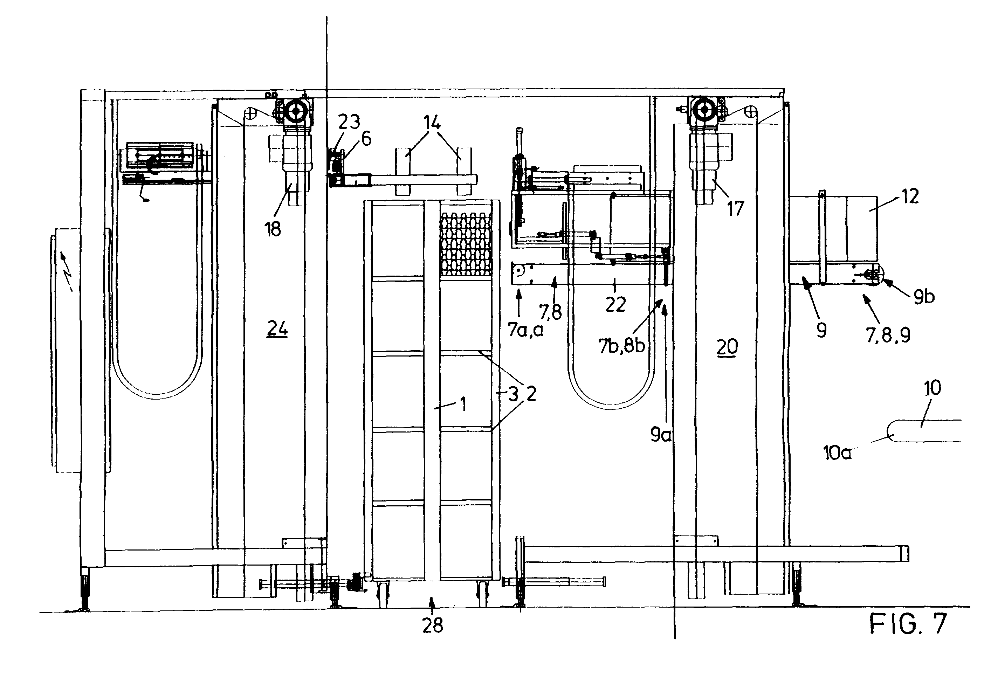

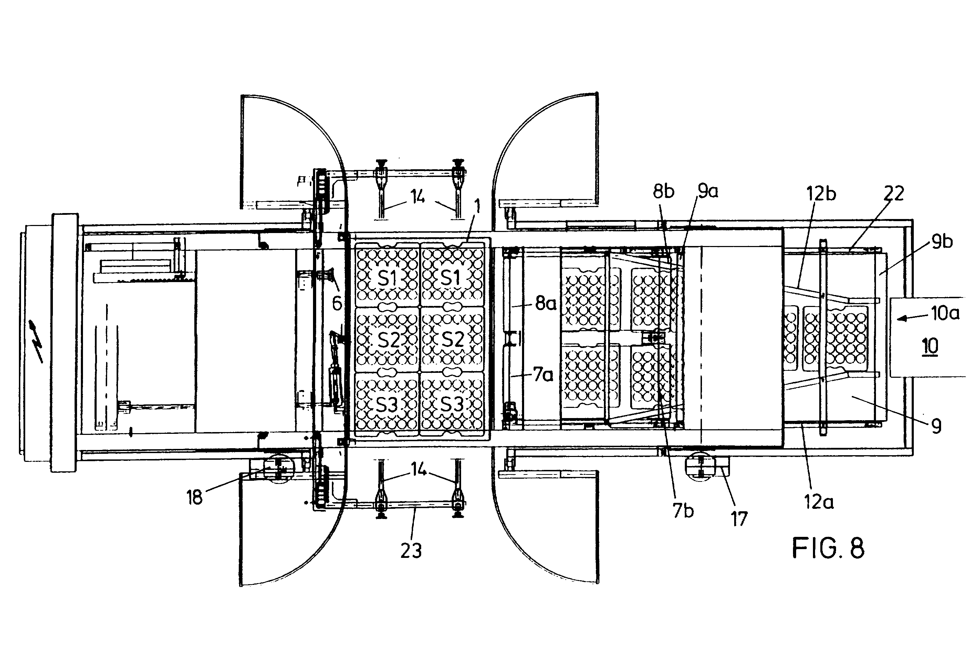

In the exemplary embodiment of an unloading apparatus shown in Figs. 5 and 6, the conveyor assembly 7, 8, 9 is fixedly disposed and only the collecting table 4 is disposed so as to be movable in vertical direction. In the exemplary embodiment of an unloading apparatus shown in Figs. 7 and 8, the collecting table is absent and only a conveyor assembly 7, 8, 9 is included between the container-positioning place 28 and the further conveyor 10, the conveyor assembly 7, 8, 9 obviously being movable in vertical direction. This last exemplary embodiment has the lowest capacity, because during the transfer of stacks S between a container shelf 2 and the conveyor assembly 7, 8, 9 no transfer of stacks S onto the further conveyor 10 can take place; however, the apparatus is relatively simple and hence particularly interesting from an economical viewpoint.

The exemplary embodiment shown in Figs. 1 and 2 concerns an unloading apparatus of a very high capacity. The conveyor assembly 7, 8, 9 is supported by a frame 22 which, via guiding wheels, is displaceable in vertical direction along standards 20. An electromotor 17 cooperates with chains or belts for moving the conveyor assembly 7, 8, 9 up and down along the standards 20. The conveyor assembly 7, 8, 9 has two first conveyors 7, 8 located on the side of the conveyor assembly 7, 8, 9 facing the container-positioning place 28, and a second conveyor 9 located on the side of the conveyor assembly 7, 8, 9 facing the further conveyor 10. The first conveyors 7, 8 are drivable independently of each other. Located above the conveying surface of the second conveyor 9 are two guiding elements 12a, 12b bounding a funnel-shaped path by means of which stacks S coming from the first conveyors 7, 8 are guided to the center of the second conveyor 9, enabling these stacks S to be transferred, accurately positioned one behind the other, onto the further conveyor 10. The exemplary embodiment shown in Figs. 1 and 2 also comprises a collecting table 4, movable up and down, whose collecting table surface is formed by the top part of a collecting table conveyor 11. The collecting table 4 is supported by a frame 21 having guiding wheels by means of which the collecting table 4 can be moved up and down along two standards 19. The drive of the vertical movement is formed by an electromotor 5 driving a chain or belt from which the frame 21 and, accordingly, the collecting table 4 is suspended. The first end 11a of the collecting table conveyor 11 can be connected to a container shelf 2, and the second end llb of the collecting table conveyor 11 can be connected to the first ends 7a, 8a of the first conveyors 7, 8 of the conveyor assembly. The frame 21 moreover comprises a lifting hook 13 by means of which the container shelf 2 located above the container shelf 2 that is being unloaded can be temporarily lifted to create sufficient space for unloading.

The apparatus of Figs. 1 and 2 moreover comprises sliding means 6, 14, displaceable in vertical direction relative to the container 1. For this purpose, the sliding means 6, 14 are connected to a frame 23, guided in vertical direction along standards 24, while the vertical displacement of the frame 23 is effected by an electromotor 18 driving two chain wheels over which chains pass from which the frame 23 is suspended. The sliding elements 6, 14 comprise sliding elements 6 for pushing stacks of packages S from the container shelf 2 onto the collecting table conveyor 11, and pushing elements 14 for pushing the outer rows S1, S3 of stacks of packages towards each other.

The exemplary embodiment of Figs. 3 and 4 differs from the exemplary embodiment shown in Figs. 1 and 2 in that it concerns a loading apparatus. Here, the funnel-shaped guiding elements 12 above the second conveyor 9 of the conveyor assembly 7, 8, 9 are absent. These guiding elements 12 have been replaced by guiding elements 15 designed as pivotally arranged guiding elements 15 bounding a conveying path which, viewed from the second end 9b of the second conveyor 9, in a first swivel position leads to one first conveyor 7 and in a second swivel position leads to the other first conveyor 8, and which in a neutral position leads straight on. In this manner, stacks of packages S coming from the further conveyor 10 can either be guided to one first conveyor 7 or to the other first conveyor 8, or straight on. Further, the sliding means for the loading apparatus are of different design. In the present exemplary embodiment, the pushing elements 6 and 14 are absent and pushing elements 16 are added by means of which two rows of stacks S1, S3, fed parallel to each other, can be slid outwards on the container shelf 2, so that a space is created therebetween wherein a second row of stacks of packages S2 can be received.

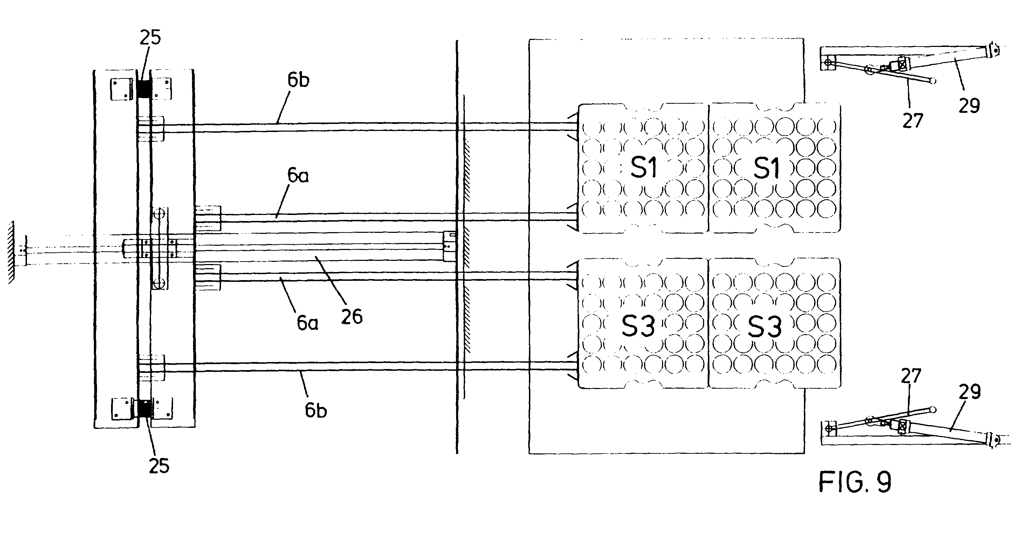

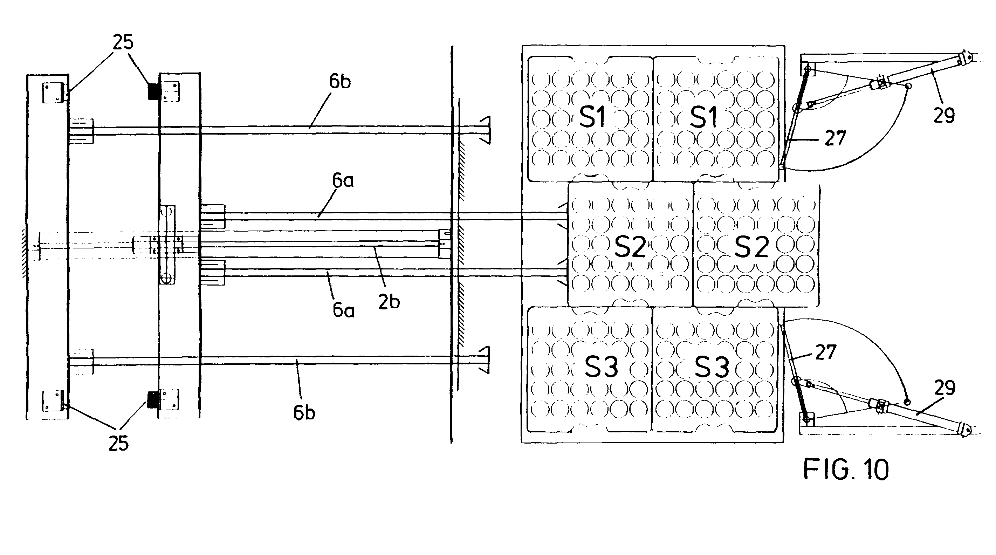

The exemplary embodiment shown in Figs. 5 and 6 concerns an unloading apparatus different from the exemplary embodiment shown in Figs. 1 and 2 in that the conveyor assembly 7, 8, 9 is not arranged for displacement in vertical direction, but has a fixed position. Moreover, the collecting table has been extended compared with the exemplary embodiment of Fig. 1, permitting the complete number of stacks that can be stored on a container shelf 2 to be positioned thereon. Further, in the exemplary embodiment shown in Fig. 5, retaining elements 27 are provided, mounted on the frame of the collecting table 4. These retaining elements 27 will be described more precisely with reference to Figs. 9 and 10. Compared with the apparatus of Figs. 1 and 2, this apparatus offers the advantage that it is simpler and hence cheaper, while the capacity is only slightly smaller.

The exemplary embodiment of Figs. 7 and 8 relates to an unloading apparatus different from the exemplary embodiment of Figs. 1 and 2 in that the collecting table is now completely absent. Between the further conveyor 10 and the container-positioning place 28 only the conveyor assembly 7, 8, 9 is located. The first ends 7a, 8a of the first conveyor 7, 8 can be connected to the container shelves 2 of the container 1, while the second end 9b of the second conveyor 9 of the conveyor assembly 7, 8, 9 can be connected to the end 10a of the further conveyor 10.

In particular in respect of the unloading apparatuses, it is particularly favorable if the conveying speed of the conveyors 11, 7, 8 which are connectable to a container shelf 2 have a conveying speed greater than the speed of travel of the pushing elements 6 by means of which the stacks of packages S are slid from the container shelf 2. It is thus effected that the pressure exerted by the pushing elements 6 on the stacks of packages decreases as quickly as possible when the conveyance of the stacks of packages S is taken over by the conveyors 7, 8, 11.

Moreover, it is particularly favorable if in the case of the exemplary embodiments shown in Figs. 1-6 the collecting table, and in the case of the exemplary embodiment shown in Figs. 7, 8 the conveyor assembly 7, 8, 9, is also disposed so as to be displaceable in horizontal direction to a slight extent, allowing the collecting table 4 or the conveyor asembly 7, 8, 9 respectively to be pressed against the container 1 to obtain a defined stable position of the container 1. Owing to the pressure exerted, the container is clamped in a defined position, so that the transfer of the stacks of packages S can take place in a controlled manner.

Figs. 9 and 10 show a detail of the sliding means of a container-unloading apparatus. The sliding means 6 comprise first pushing elements 6a, reciprocably arranged for sliding a first series of stacks of trays or boxes S2 from a container shelf 2, and second pushing elements 6b, reciprocably arranged for sliding a second series of stacks of trays or boxes S1, S3 from a container shelf 2. The sliding means 6 have coupling means 25 for coupling and uncoupling the first and second pushing elements 6a, 6b, so that in an uncoupled condition only the first pushing elements 6a are reciprocably drivable by a driving unit 26, and in a coupled condition the first and the second pushing element 6a, 6b are jointly reciprocable by this driving unit 26. The sliding means also comprise third pushing elements 14 reciprocable in a direction perpendicular to the first and the second pushing elements 6a, 6b. The third pushing elements 14 are intended for sliding outwardly located stacks of boxes or trays S1, S3 towards each other. Owing to the presence of the coupling means 25, only one driving mechanism 26 is necessary for drivng both the first and the second pushing elements 6a, 6b. Hence, these coupling elements 25, which can for instance be formed by an electrically excitable plug-hole connection or by electrically excitable magnets, save one motor, which is particularly advantageous for economical reasons. Figs. 9 and 10 moreover clearly show retaining elements 27 located on the side of the container-positioning place 28 remote from the first and second pushing elements 6a, 6b and adapted to assume a first position and a second position, the retaining elements 27 being in the first position when only the first pushing element 6a is operative and in a second position when both the first and the second pushing elements 6a, 6b are operative. The excitation of the retaining elements 27, which are constructed as pivotable arms 27, can for instance take place by means of piston/cylinder assemblies 29. In the first position, the outer rows of stacks S1, S3 are retained, while in the second position the entire discharge side of the container shelf 2 is released and the outer rows of stacks S1, S3 can be slid from the container shelf 2. Similar retaining elements 27 could also serve as press-on elements in a loading apparatus for sliding stacks of packages S that have already been partly moved onto a container shelf 2 by the endless conveyors 7, 8 or 11, onto a container shelf 2 completely.

It is readily understood that the invention is not limited to the exemplary embodiments described, but that various modifications are possible within the framework of the invention.

## Claims

1. An apparatus for loading and/or unloading a container (1) with stacks of packages (S), such as for instance egg boxes or egg trays, said container (1) comprising a number of container shelves (2) which are arranged one above the other and supported by a frame (3), the apparatus comprising:
- a container-positioning place (28),
- sliding means (6, 14, 16) for sliding the stacks of packages (S) on a container shelf (2), said means (6) being displaceable in vertical direction relative to the container (1), and
- transfer means (7, 8, 9) for transferring the stacks of packages (S) from the container shelf (2) onto one end (10a) of a further conveyor (10),
characterized in that
- the transfer means (7, 8, 9) comprise an endless conveyor assembly (7, 8, 9) provided, on a side thereof facing the container-positioning place, with at least two endless first conveyors (7, 8), drivable independently of each other and extending next to each other, and, on a side thereof facing the further conveyor (10), with a single, endless second conveyor (9), while
- a second end (7b, 8b) of each first conveyor (7, 8) connects to a first end (9a) of the second conveyor (9), and
- guiding elements (12, 15) are disposed above the conveying surface of at least the second conveyor (9) for guiding the stacks (S) to be displaced.

2. An apparatus according to claim 1, characterized in that the conveyor assembly (7, 8, 9) comprises means for displacing the conveyor assembly (7, 8, 9) in vertical direction, the first conveyors (7, 8) having first ends (7a, 8a) which, through vertical displacement of the conveyor assembly (7, 8, 9), are connectable to a discharge side of each container shelf (2), and the second conveyor (9) having a second end (9b) which, through vertical displacement of the conveyor assembly (7, 8, 9), is connectable to the end (10a) of the further conveyor (10).

3. An apparatus according to claim 2, characterized in that the conveyor assembly (7, 8, 9) is disposed for displacement in horizontal direction, enabling the conveyor assembly to be pressed against the container (1) for obtaining a defined stable position of the container (1).

4. An apparatus according to any one of the preceding claims, characterized in that the conveying direction of each endless conveyor (7, 8, 9) of the conveyor assembly (7, 8, 9) and the further conveyor (10) corresponds to the direction in which the sliding means (6) transfer the stacks of packages between the container shelf (2) and the conveyor assembly (7, 8, 9).

5. An apparatus according to any one of the preceding claims, characterized in that the conveying speed of the first conveyors (7, 8) is at least as great as the speed of movement of the sliding means (6).

6. An apparatus according to claim 1, characterized in that the conveyor assembly (7, 8, 9) has a position fixed in vertical sense, a second end (9b) of the second conveyor connecting to an end (10a) of the further conveyor (10), whilst between the conveyor assembly (7, 8, 9) and the container-positioning place (28) a collecting table (4) is provided, said collecting table (4) comprising means (5) for moving the collecting table (4) in vertical direction, the collecting table (4) comprising an endless collecting table conveyor (11) having a first end (lla) which is connectable to a discharge side of each container shelf (2) through vertical displacement of the collecting table (4), and a second end (11b) which is connectable to the first ends (7a, 8a) of the first conveyors (7, 8) through vertical displacement of the collecting table (4).

7. An apparatus according to claim 6, characterized in that the collecting table (4) is disposed for displacement in horizontal direction, enabling the collecting table (4) to be pressed against the container (1) for obtaining a defined stable position of the container (1).

8. An apparatus according to claim 6 or 7, characterized in that the conveying direction of the collecting table conveyor (11), each endless conveyor (7, 8, 9) of the conveyor assembly (7, 8, 9), and the further conveyor (10) corresponds to the direction in which the sliding means (6) transfer the stacks of packages between the container shelf (2) and the collecting table (4).

9. An apparatus according to any one of claims 6-8, characterized in that the conveying speed of the collecting table conveyor (11) is at least as great as the speed of movement of the sliding means (6).

10. An apparatus according to any one of the preceding claims, characterized in that it concerns a container-unloading apparatus, the sliding means (6) comprising first pushing elements (6a) reciprocably arranged for sliding a first series of stacks of trays or boxes (S2) from a container shelf (2), and second pushing elements (6b) reciprocably arranged for sliding a second series of stacks of trays or boxes (S1, S3) from a container shelf (2), there being provided coupling means (25) for coupling and uncoupling the first and the second pushing elements (6a, 6b), so that in an uncoupled condition only the first pushing elements (6a) are reciprocably drivable by a driving unit (26) and in a coupled condition the first and the second pushing elements (6a, 6b) are jointly reciprocable by said driving unit (26), the sliding means (6, 14) also comprising third pushing elements (14) reciprocable in a direction perpendicular to the first and the second pushing elements (6a, 6b), said third pushing elements (14) being intended for sliding outwardly located stacks of boxes or trays (S1, S3) towards each other.

11. An apparatus according to claim 10, characterized in that the coupling means (25) are formed by electrically excitable magnets.

12. An apparatus according to any one of the preceding claims, characterized in that it concerns a container-unloading apparatus, the guiding elements (12) being designed as two funnel-shaped guiding elements (12a, 12b) whose mutual distance, viewed in the conveying direction from the first end (9a) to the second end (9b) of the second conveyor (9), decreases, and the distance between the guiding elements (12a, 12b) at the first end (9a) of the second conveyor (9) at least corresponds to twice the width of the stacks of packages (S) to be processed, whilst this distance at the second end (9b) of the second conveyor (9) is larger than the width but in any case smaller than twice the width of the stacks of packages (S) to be processed.

13. An apparatus according to claim 10, characterized in that each container shelf (2) is suitable for receiving six stacks of packages (S) juxtaposed in three rows (S1, S2, S3) extending in the conveying direction of the conveyor assembly (7, 8, 9), the first pushing element (6a) serving to slide a central row of stacks (S2) from the container shelf (2), the second pushing elements (6b) serving to slide outer rows of stacks (S1, S3) from the container shelf (2), the apparatus comprising retaining elements (27) located on the side of the container-positioning place (28) remote from the first and second pushing elements (6a, 6b) and adapted to assume a first position and a second position, the retaining elements (27) being in the first position when only the first pushing element (6a) is operative, in which first position the outer rows of stacks (S1, S3) are retained, and the retaining elements (27) being in the second position when both the first and the second pushing elements (6a, 6b) are operative, in which second position the entire discharge side of the container shelf (2) is released and the outer rows of stacks (S1, S3) can be slid from the container shelf (2).

14. An apparatus according to any one of claims 1-9, characterized in that it concerns a container-loading apparatus, the guiding elements (15) being designed as pivotally arranged guiding elements (15) bounding a conveying path which, viewed from the second end (9b) of the second conveyor (9), in a first swivel position leads to one first conveyor (7) and in a second swivel position leads to the other first conveyor (8), and which in a neutral position leads straight on.

15. An apparatus according to claim 14, characterized in that the sliding means comprise pushing elements (16) intended for moving apart two rows of stacks (S1, S3) placed on a container shelf (2).

16. An apparatus according to any one of the preceding claims, characterized in that it comprises means (13) for temporarily lifting a side, facing the collecting table (4), of a container shelf (2) located above the container shelf (2) which is being loaded or unloaded.

## Patentansprüche

1. Vorrichtung zum Be- und/oder Entladen von einem Behälter (1) mit Stapeln von Packungen (S), insbesondere Eierkartons oder Eierschachteln, wobei der Behälter (1) eine Mehrzahl von Behälterböden (2) umfaßt, die einer über dem anderen angeordnet sind und von einem Rahmen (3) getragen werden, wobei die Vorrichtung umfaßt:
- einen Behälter-Positionier-Ort (28)
- Verschiebemittel (6, 14, 16) zum Verschieben der Stapel von Packungen (S) auf einem Behälterboden (2), wobei die Mittel (6) in vertikaler Richtung relativ zu dem Behälter (1) verlagerbar sind und
- Übergabemittel (7, 8, 9) zum Übergeben der Stapel von Packungen (S) von dem Behälterboden (2) auf ein Ende (10a) eines weiteren Förderers (10),
**dadurch gekennzeichnet,** daß
- die Übergabemittel (7, 8, 9) eine Endlos-Förder-Anordnung (7, 8, 9) umfaßt, die auf einer ihrer dem Behälterpositionierort zugewandten Seite mit mindestens zwei ersten Endlosförderern (7, 8) versehen sind, die unabhängig voneinander antreibbar sind und sich nebeneinander erstrecken, und, auf ihrer dem weiteren Förderer (10) zugewandten Seite, mit einem einzelnen, zweiten Endlosförderer (9), wobei
- ein zweites Ende (7b, 8b) von jedem ersten Förderer (7, 8) an das erste Ende (9a) des zweiten Förderers (9) anschließt und
- Führungselemente (12, 15) über der Förderoberfläche zumindest des zweiten Förderers (9) angeordnet sind, um die zu verlagernden Stapel (S) zu führen.

2. Vorrichtung nach Anspruch 1, dadurch gekennzeichnet, daß die Förderanordnung (7, 8, 9) Mittel zur Verlagerung der Förderanordnung (7, 8, 9) in vertikaler Richtung umfaßt, die ersten Förderer (7, 8) erste Enden (7a, 8a) aufweisen, die durch eine vertikale Verlagerung der Förderanordnung (7, 8, 9) an eine Entladeseite jedes Behälterbodens (2) anschließbar sind, und der zweite Förderer (9) zweite Enden (9) aufweist, die durch eine vertikale Verlagerung der ersten Förderanordnung (7, 8, 9) an das Ende (10a) des weiteren Förderers (10) anschließbar ist.

3. Vorrichtung nach Anspruch 2, dadurch gekennzeichnet, daß die Förderanordnung (7, 8, 9) für eine Verlagerung in horizontaler Richtung vorgesehen ist, die es der Förderanordnung ermöglicht, gegen den Behälter (1) gepreßt zu werden, um eine definierte Stapelposition des Behälters zu bewirken.

4. Vorrichtung nach einem der voranstehenden Ansprüche, dadurch gekennzeichnet, daß die Förderrichtung von jedem endlosen Förderer (7, 8, 9) der Förderanordnungen (7, 8, 9) und des weiteren Förderers (10) derjenigen Richtung entspricht, in welcher die Verschiebemittel (6) die Stapel von Packungen zwischen dem Behälterboden (2) und der Förderanordnung (7, 8, 9) verlagern.

5. Vorrichtung nach einem der voranstehenden Ansprüche, dadurch gekennzeichnet, daß die Fördergeschwindigkeit der ersten Förderer (7, 8) mindestens so groß ist wie die Bewegungsgeschwindigkeit der Verschiebemittel (6).

6. Vorrichtung nach Anspruch 1, dadurch gekennzeichnet, daß die Förderanordnung (7, 8, 9) eine im vertikalen Sinne feststehende Position aufweist, ein zweites Ende (9b) des zweiten Förderers an ein Ende (10a) des weiteren Förderers (10) anschließt, während zwischen der Förderanordnung (7, 8, 9) und dem Behälter-Positionier-Ort (28) ein Sammeltisch (4) vorgesehen ist, wobei der Sammeltisch (4) Mittel (5) zum Verlagern des Sammeltischs (4) in vertikaler Richtung umfaßt, der Sammeltisch (4) einen endlosen Sammeltischförderer (11) mit einem ersten Ende (11a), das an einer Entladeseite eines jeden Behälterbodens (2) durch eine vertikale Verlagerung des Sammeltischs (4) anschließbar ist, und einem zweiten Ende (11b), das durch eine vertikale Verlagerung des Sammeltischs (4) an das erste Ende (7a, 8a) der ersten Förderer (7, 8) anschließbar ist, umfaßt.

7. Vorrichtung nach Anspruch 6, dadurch gekennzeichnet, daß der Sammeltisch (4) für eine Verlagerung in horizontaler Richtung geeignet ist, die es ermöglicht, den Sammeltisch (4) gegen den Behälter (1) zu pressen, um eine definierte Stapelposition des Containers (1) zu erzielen.

8. Vorrichtung nach Anspruch 6 oder 7, dadurch gekennzeichnet, daß die Förderrichtung des Sammeltischförderers (11), eines jeden Endlosförderers (7, 8, 9) der Förderanordnung (7, 8, 9) und des weiteren Förderers (10) derjenigen Richtung entspricht, in welcher die Verschiebemittel (6) die Stapel von Packungen zwischen dem Behälterboden (2) und dem Sammeltisch (4) verlagern.

9. Vorrichtung nach einem der Ansprüche 6 bis 8, dadurch gekennzeichnet, daß die Fördergeschwindigkeit des Sammeltischförderers (11) zumindest so groß ist wie die Geschwindigkeit der Bewegung der Verschiebemittel (6).

10. Vorrichtung nach einem der voranstehenden Ansprüche, dadurch gekennzeichnet, daß sie eine Behälterentladevorrichtung betrifft, wobei die Verschiebemittel (6) hin- und herverlagerbar angeordnete erste Schubelemente (6a) zum Verschieben einer ersten Serie von Stapeln von Eierkartons oder Eierschachteln (S2) von einem Behälterboden (2) und hin- und herverlagerbar angeordnete zweite Schubelemente (6) zum Verschieben einer zweiten Serie von Stapeln von Eierkartons oder Eierschachteln (S1, S3) von einem Behälterboden (2) umfassen, wobei Kopplungsmittel (25) zum Koppeln und Entkoppeln der ersten und zweiten Schub elemente (6a, 6b) vorgesehen sind, so daß in einem ungekoppelten Zustand nur die ersten Schubelemente (6a) gegenläufig hin- und hergehend durch eine Antriebseinheit (26) antreibbar sind und in einem gekoppelten Zustand die ersten und die zweiten Schub-elemente (6) durch die Antriebseinheit (26) gemeinsam hin- und hergehen, die Verschiebemittel (6, 14) des weiteren dritte Schubelemente (14) umfassen, die hin- und herverlagerbar in einer Richtung senkrecht zu den ersten und zweiten Schubelementen (6a, 6b) sind, wobei die dritten Schubelemente (14) zum Verschieben außen befindlicher Stapel von Kartons oder Schachteln (S1, S2) zueinander vorgesehen sind.

11. Vorrichtung nach Anspruch 10, dadurch gekennzeichnet, daß die Kopplungsmittel (25) durch elektrisch erregbare Magneten gebildet sind.

12. Vorrichtung nach einem der voranstehenden Ansprüche, dadurch gekennzeichnet, daß sie eine Behälterentladevorrichtung betrifft, wobei die Führungselemente (12) als trichterförmige Führungselemente (12a, 12b) ausgebildet sind, deren gegenseitige Entfernung, betrachtet in Förderrichtung von dem ersten Ende (9a) zu dem zweiten Ende (9b) des zweiten Förderers (9), abnimmt, und die Entfernung zwischen den Führungselementen (12a, 12b) an dem ersten Ende (9a) des zweiten Förderers (9) mindestens dem Doppelten der Breite der Stapel von abzufertigenden Packungen (S) entspricht, wobei diese Entfernung an dem zweiten Ende (9b) des zweiten Förderers (2) größer ist als die Breite aber in jedem Falle schmaler als das Zweifache der Breite der Stapel von abzufertigenden Packungen ist.

13. Vorrichtung nach Anspruch 10, dadurch gekennzeichnet, daß jeder Behälterboden (2) geeignet ist, um sechs Stapel von Packungen (S), die nebeneinander in drei Reihen (S1, S2, S3), die sich in Förderrichtung der Förderanordnung (7, 8, 9) erstrecken, aufzunehmen, wobei das erste Schubelement (6a) dem Verschieben einer zentralen Reihe von Stapeln (2) von dem Behälterboden (2) dient, die zweiten Schubelemente (6) zum Verschieben äußerer Reihen von Stapeln (S1, S3) von dem Behälterboden (2) dienen, die Vorrichtung Zurückhalteelemente (27) umfaßt, die auf der von den ersten und zweiten Schubelementen (6a, 6b) abgelegenen Seite des Behälter-Positionier-Ortes (28) angeordnet und geeignet ist, eine erste Position und eine zweite Position einzunehmen, wobei sich die Zurückhalteelemente (27) in der ersten Position befinden, wenn nur das erste Schubelement (6a) in Betrieb ist, wobei in dieser ersten Position die äußeren Reihen von Stapeln (S1, S3) zurückgehalten werden, und wobei die Zurückhalteelemente (27) sich in der zweiten Position befinden, wenn sowohl die ersten, als auch die zweiten Schubelemente (6a, 6b) in Betrieb sind, wobei in der zweiten Position die vollständige Entladeseite des Behälterbodens (2) freigegeben ist und die äußeren Reihen von Stapeln (S1, S3) von dem Behälterboden (2) geschoben werden können.

14. Vorrichtung nach einem der Ansprüche 1 bis 9, dadurch gekennzeichnet, daß sie eine Behälterbeladevorrichtung betrifft, bei der die Führungselemente (15) als drehbar angeordnete Führungselemente (15) ausgestaltet sind, die einen Förderpfad begrenzen, der, betrachtet von dem zweiten Ende (9b) des zweiten Förderers (9), in einer ersten Schwenkstellung zu dem einen ersten Förderer (7) führen und in einer zweiten Schwenkstellung zu dem anderen ersten Förderer (8) führen, und welche in einer Neutralstellung geradeausführen.

15. Vorrichtung nach Anspruch 14, dadurch gekennzeichnet, daß die Verschiebemittel Schubmittel (16) umfassen, die zum Auseinanderschieben von zwei Reihen von Stapeln (S1, S3), die sich auf einem Behälterboden (2) befinden, vorgesehen sind.

16. Vorrichtung nach einem der voranstehenden Ansprüche, dadurch gekennzeichnet, daß sie Mittel (13) zum zeitweisen Anheben einer Seite, die dem Sammeltisch (4) zugewandt ist, eines Behälterbodens (2), der sich über dem Behälterboden (2) befindet, der be- oder entladen wird, umfaßt.

## Revendications

1. Appareil de chargement d'empilements d'emballages (S), par exemple des boîtes ou des plateaux d'oeufs, dans un récipient (1) et/ou de déchargement d'un tel récipient, celui-ci (1) comprenant un certain nombre d'étagères (2) de récipient qui sont disposées les unes au-dessus des autres et supportées par un châssis (3), l'appareil comprenant :
un emplacement (28) de positionnement de récipient,
un dispositif (6, 14, 16) de glissement des empilements d'emballages (S) sur une étagère (2) de récipient, le dispositif (6) étant mobile en direction verticale par rapport au récipient (1), et
un dispositif de transfert (7, 8, 9) destiné à transférer les empilements d'emballages (S) de l'étagère (2) du récipient sur une première extrémité (10a) d'un transporteur supplémentaire (10),
caractérisé en ce que
le dispositif de transfert (7, 8, 9) comporte un ensemble transporteur sans fin (7, 8, 9) ayant, d'un côté tourné vers l'emplacement de positionnement de récipient, au moins deux premiers transporteurs sans fin (7, 8) qui peuvent être entraînés indépendamment l'un de l'autre et qui s'étendent l'un près de l'autre et, du côté tourné vers le transporteur supplémentaire (10), un seul second transporteur sans fin (9), alors que
une seconde extrémité (7b, 8b) de chaque premier transporteur (7, 8) se raccorde à une première extrémité (9a) du second transporteur (9), et
des éléments de guidage (12, 15) sont disposés au-dessus de la surface de transport du second transporteur au moins (9) pour le guidage des empilements (S) qui doivent être déplacés.

2. Appareil selon la revendication 1, caractérisé en ce que l'ensemble transporteur (7, 8, 9) comprend un dispositif de déplacement de l'ensemble transporteur (7, 8, 9) en direction verticale, les premiers transporteurs (7, 8) ayant des premières extrémités (7a, 8a) qui, par déplacement vertical de l'ensemble transporteur (7, 8, 9), peuvent être raccordées à un côté d'évacuation de chaque étagère (2) de récipient, et le second transporteur (9) ayant une seconde extrémité (9b) qui, par déplacement vertical de l'ensemble transporteur (7, 8, 9), peut être raccordée à l'extrémité (10a) du transporteur supplémentaire (10).

3. Appareil selon la revendication 2, caractérisé en ce que l'ensemble transporteur (7, 8, 9) est disposé afin qu'il se déplace en direction horizontale et permette à l'ensemble transporteur d'être repoussé contre le récipient (1) pour l'obtention d'une position stable déterminée du récipient (1).

4. Appareil selon l'une quelconque des revendications précédentes, caractérisé en ce que la direction de transport de chaque transporteur sans fin (7, 8, 9) de l'ensemble transporteur (7, 8, 9) et du transporteur supplémentaire (10) correspond à la direction dans laquelle le dispositif de glissement (6) transfère les empilements d'emballages entre l'étagère (2) du récipient et l'ensemble transporteur (7, 8, 9).

5. Appareil selon l'une quelconque des revendications précédentes, caractérisé en ce que la vitesse de transport des premiers transporteurs (7, 8) est au moins égale à la vitesse de déplacement du dispositif de glissement (6).

6. Appareil selon la revendication 1, caractérisé en ce que l'ensemble transporteur (7, 8, 9) a une position fixée en direction verticale, une seconde extrémité (9b) du second transporteur se raccordant à une extrémité (10a) du transporteur supplémentaire (10), alors que, entre l'ensemble transporteur (7, 8, 9) et l'emplacement (28) de positionnement de récipient, une table de collecte (4) est incorporée, cette table de collecte (4) comprenant un dispositif (5) destiné à déplacer la table de collecte (4) en direction verticale, la table de collecte (4) comprenant un transporteur sans fin (11) de table de collecte ayant une première extrémité (11a) qui peut être raccordée à un côté d'évacuation de chaque étagère (2) de récipient par déplacement vertical de la table de collecte (4), et une seconde extrémité (11b) qui peut être raccordée aux premières extrémités (7a, 8a) des premiers transporteurs (7, 8) par déplacement vertical de la table de collecte (4).

7. Appareil selon la revendication 6, caractérisé en ce que la table de collecte (4) est disposée afin qu'elle se déplace en direction horizontale et permette à la table de collecte (4) d'être poussée contre le récipient (1) afin qu'une position stable déterminée du récipient (1) soit obtenue.

8. Appareil selon la revendication 6 ou 7, caractérisé en ce que la direction de transport du transporteur (11) de la table de collecte, de chaque transporteur sans fin (7, 8, 9) de l'ensemble transporteur (7, 8, 9) et du transporteur supplémentaire (10) correspond à la direction dans laquelle le dispositif de glissement (6) transfère les empilements d'emballages entre l'étagère (2) du récipient et la table de collecte (4).

9. Appareil selon l'une quelconque des revendications 6 à 8, caractérisé en ce que la vitesse de transport du transporteur (11) de table de collecte est au moins égale à la vitesse de déplacement du dispositif de glissement (6).

10. Appareil selon l'une quelconque des revendications précédentes, caractérisé en ce qu'il concerne un appareil de déchargement de récipient, le dispositif de glissement (6), comprenant des premiers éléments de poussée (6a) disposés afin qu'ils se déplacent alternativement et fassent glisser une première série d'empilements de plateaux ou de boîtes (S2) depuis une étagère (2) du récipient, et des seconds éléments (6b) de poussée placés afin qu'ils se déplacent alternativement et fassent glisser une seconde série d'empilements de plateaux ou de boîtes (S1, S3) d'une étagère (2) de récipient, un dispositif (25) d'accouplement étant destiné à coupler et découpler les premiers et seconds éléments de poussée (6a, 6b), si bien que, à l'état découplé, seuls les premiers éléments de poussée (6a) peuvent être entraînés en translation par une unité d'entraînement (26) et, à un état couplé, les premiers et seconds éléments de poussée (6a, 6b) peuvent être déplacés ensemble en translation par l'unité d'entraînement (26), le dispositif de glissement (6, 14) comprenant aussi des troisièmes éléments de poussée (14) mobiles en translation en direction perpendiculaire aux premiers et seconds éléments de poussée (6a, 6b), les troisièmes éléments de poussée (14) étant destinés à faire glisser les uns vers les autres les empilements de boîtes ou plateaux (S1, S3) placés vers l'extérieur.

11. Appareil selon la revendication 10, caractérisé en ce que le dispositif de couplage (25) est formé par des aimants qui peuvent être excités électriquement.

12. Appareil selon l'une quelconque des revendications précédentes, caractérisé en ce qu'il concerne un appareil de déchargement de récipient, les éléments de guidage (12) étant réalisés sous forme de deux éléments de guidage (12a, 12b) en forme d'entonnoir ayant une distance mutuelle, vue dans la direction de transport depuis la première extrémité (9a) vers la seconde extrémité (9b) du second transporteur (9) qui diminue, la distance comprise entre les éléments de guidage (12a, 12b) à la première extrémité (9a) du second transporteur (9) correspondant au moins au double de la largeur des empilements d'emballages (S) à traiter, alors que cette distance, à la seconde extrémité (9b) du second transporteur (9) est supérieure à la largeur mais de toute manière inférieure au double de la largeur des empilements d'emballages (S) à traiter.

13. Appareil selon la revendication 10, caractérisé en ce que chaque étagère (2) de récipient peut loger six empilements d'emballages (S) juxtaposés en trois rangées (S1, S2, S3) qui s'étendent dans la direction de transport de l'ensemble transporteur (7, 8, 9), le premier élément de poussée (6a) étant utilisé pour faire glisser une rangée centrale d'empilements (S2) depuis l'étagère (2) du récipient, les seconds éléments de poussée (6b) étant utilisés pour faire glisser les rangées externes d'empilements (S1, S2) depuis l'étagère (2) du récipient, l'appareil comprenant des éléments (27) de retenue placés du côté de l'emplacement (28) de positionnement de récipient qui est distant des premiers et seconds éléments de poussée (6a, 6b) et destinés à prendre une première position et une seconde position, les éléments de retenue (27) étant dans la première position lorsque seul le premier élément de poussée (6a) est en fonctionnement, les rangées externes d'empilements (S1, S3) étant retenues dans cette première position, et les éléments de retenue (27) étant dans la seconde position lorsque les premiers et seconds éléments de poussée (6a, 6b) sont en fonctionnement, le côté d'évacuation complet de l'étagère (2) du récipient étant libéré dans cette seconde position, et les rangées externes d'empilements (S1, S3) pouvant alors glisser depuis l'étagère (2) du récipient.

14. Appareil selon l'une quelconque des revendications 1 à 9, caractérisé en ce qu'il concerne un appareil de chargement de récipient, les éléments de guidage (15) étant réalisés sous forme d'éléments (15) de guidage qui peuvent pivoter et qui délimitent un trajet de transport qui, vu depuis la seconde extrémité (9b) du second transporteur (9), dans une première position de basculement, conduit à un premier transporteur (7) et, dans une seconde position de basculement, conduit à l'autre premier transporteur (8), et qui, en position neutre, conduit droit devant.

15. Appareil selon la revendication 14, caractérisé en ce que le dispositif de glissement comprend des éléments de poussée (16) destinés à écarter deux rangées d'empilements (S1, S2) placées sur une étagère (2) du récipient.

16. Appareil selon l'une quelconque des revendications précédentes, caractérisé en ce qu'il comprend un dispositif (13) destiné à soulever temporairement un côté, tourné vers la table de collecte (4), d'une étagère (2) de récipient placée au-dessus de l'étagère (2) de récipient qui est en cours de chargement ou de déchargement.
